# EUROPEAN PATENT APPLICATION

(11) **EP 4 852 481 A1**
(43) Date of publication of application: **09.12.2026**
(21) Application number: 26181185.5
(22) Date of filing: 26.05.2026
(51) Int. Cl.: H04W 12/06, H04W 4/50, H04W 12/08, H04W 12/73, H04W 48/16, H04W 76/15

(54) **METHOD, SYSTEM, AND APPARATUS FOR PROVISIONING MESH BONDING IN DATA CONNECTIVITY NETWORKS**

(30) Priority: 05.06.2025 US 202563818044 P
(71) Applicant: LRIC Ltd, London N3 2BS (GB)
(72) Inventor:

(57) **Abstract**

A system, method, and apparatus provide secure, resilient and optionally anonymous wireless connectivity using onboarding and proprietary wireless network identifiers. A host device provides an onboarding wireless identifier and a different proprietary wireless identifier for authenticated access. The proprietary identifier may be hidden, visible, coded, obfuscated, rotating, tokenized or otherwise controlled. A client device obtains or derives credentials through onboarding and transmits user traffic through the proprietary identifier. In some embodiments, the client discovers multiple proprietary identifiers, establishes multiple wireless links and aggregates them into a bonded virtual network interface presented as a single logical connection. Link-quality monitoring may allocate, move, duplicate or fail over traffic across available links. Optional central coordination may manage policy, credential rotation, anonymous tokens, audit logs, reporting, payment, grant access and mesh expansion.

## Description

### BACKGROUND OF THE INVENTION

This provisional patent application relates to and builds upon subject matter disclosed in U.S. Patent Application No. 19/002,807, filed 12/27/2024. The present application includes additional features and embodiments not disclosed in the earlier filing, including the dynamic combination and bonding of multiple hidden SSIDs to establish a robust and resilient internet connection for user devices operating in the field.

The invention pertains to the field of wireless communication and network provisioning, and more specifically to systems and methods for intelligent mesh bonding across multiple wireless networks to provide continuous, high-availability connectivity in variable environments.

The prior invention, as disclosed in U.S. Patent Application No. 19/002,807, provides a method for operating a personal computer (pc) hotspot network working with a single network interface card or module that generates a unique SSID and password pair, included in which where necessary auditing and recording of user data and usage data for accounting purposes. This system is designed to facilitate secure and private network access, where both the SSID and password pair are dynamically created by proprietary software.

The prior disclosed invention operates as follows: A first computing device, such as a laptop, tablet, smartphone, or similar, running proprietary software that generates a unique SSID and password pair.

A second computing device, such as a guest device, recognizes and matches the generated SSID and password pair using the same or a similar proprietary software application, thus granting the device access to the network.

The prior invention addresses the need for secure, private access to wireless networks by generating unique SSID-password pair credentials for each connection. The computing devices involved may include a variety of devices, including PCs, laptops, tablets, smartphones, thin clients, and servers. The hotspot system described in the prior invention offers a secure method of authenticating devices, ensuring that only those with the correct SSID-password pair can access the network.

Despite the novel approach for generating and recognising unique SSID and password pairs in a proprietary environment, the prior invention operates with a single, fixed network access point. The connection process is limited to pairing devices based on a predefined SSID and password, and it does not extend to supporting multiple or dynamic connections across a broader network of devices.

In modern data communication environments, reliable and high-speed connectivity is critical for both consumer and enterprise applications. However, maintaining consistent connectivity across varying network conditions remains a persistent challenge, particularly in mobile, rural, or mission-critical settings.

In particular, the invention described herein operates within a network connectivity environment that supports bonded mesh networking, which is essential to ensure robust, redundant, and resilient data communication

### IMPROVEMENTS IN THE CURRENT INVENTION

While the prior invention essentially provides a secure, convenient and ubiquitous method of network access using a unique SSID and password pair over a single homogeneous connection, the current invention builds upon this foundation by introducing bonded mesh networking and multi-SSID aggregation. This improvement addresses limitations in the original method, where user devices could only connect to a single SSID at a time.

Another advancement introduced in the current invention is the implementation of an additional security layer. While the prior invention supports an open and secure guest network SSID, the current invention enhances this by enabling a user device-running proprietary software-to detect and connect to a hidden SSID that is exclusively available to that device and other devices on the proprietary network. This ensures a more secure and personalized network connection.

The new invention leverages the existing process of generating unique and hidden SSID and password pairs but enhances it by allowing the client device to automatically recognize and connect to multiple hidden SSIDs. This enables a secure, ubiquitous, robust and resilient mesh network that aggregates multiple network connections, improving both the reliability and the available bandwidth for user devices. Additionally, the proprietary algorithm used for SSID and password decryption is enhanced to support multiple concurrent connections, ensuring a more seamless and dynamic user experience.

Thus, the invention described herein not only builds upon the security features of the earlier system but also enhances its scalability, redundancy, and overall performance in environments where reliable connectivity is critical.

### SUMMARY OF THE INVENTION

The present invention provides a method, system, and apparatus for delivering robust and redundant wireless internet connectivity using a multi-SSID, mesh-bonded network architecture. The invention expands upon existing systems running a single network interface card or module transferring data between two ip subnetworks and addresses on the same network card and routing table

The present system provides further ways to generate and recognize hidden and unique SSID-password pairs, extending the concept to enable dynamic, multi-node bonding across multiple hidden wireless networks.

In one embodiment, a host device broadcasts two SSIDs simultaneously: an open, visible SSID intended for public access and user onboarding, and a second, hidden SSID that is proprietary to the system. The open SSID allows users to connect without prior credentials and access a locally or remotely hosted portal or client application. Through this interface, users can download software, receive assistance, and complete any required registration or subscription process.

Upon successful onboarding, the client application-now installed on the user's device-automatically detects and connects to the hidden proprietary SSID using a secure authentication process. This process employs a proprietary algorithm, as described in U.S. Patent Application No. 19/002,807, to decipher the SSID and password pair required for network access.

A key advancement in this invention lies in its ability to discover and bond with multiple hidden SSIDs broadcast by other nearby host devices operating within the same network framework. The client application aggregates these connections into a single, bonded virtual interface that provides improved throughput, link redundancy, and connection resilience. This bonding mechanism enables seamless performance, even in environments with fluctuating signal conditions or limited bandwidth per node.

The present invention gives users the ability to stay connected as and when the network provision either becomes too weak or drops off altogether. Thus offering stable and resilient network connectivity.

The system may be deployed in both static and mobile environments and is especially suitable for field operations, remote access deployments, or any setting where traditional broadband connectivity is unavailable or unreliable. By combining intelligent SSID recognition, dynamic credential decoding, and real-time bonding across multiple nodes, the invention offers a scalable and secure solution for resilient wireless internet delivery.

### DETAILED DESCRIPTION OF THE INVENTION

The present invention provides a method, system, and apparatus for delivering redundant and resilient wireless internet connectivity using a bonded mesh network comprised of multiple hidden SSIDs. The system enables user devices to initially connect through a publicly accessible wireless network and then transition seamlessly to a secure, multi-channel mesh connection using a proprietary authentication process. This invention improves upon prior systems, such as that disclosed in U.S. Patent Application No. 19/002,807, by introducing multi-SSID bonding, dynamic discovery of hidden networks, and aggregation of multiple connections into a single virtual link.

In one embodiment, a host computing device running on a single network interface card or module is configured to broadcast two wireless SSIDs simultaneously. The first SSID is visible and intended for public access, enabling new users to discover and connect to the network. Upon connection, the user may be redirected to a captive portal, a local server, or a hosted application interface, where the user can register, receive support, or download a proprietary client application. The second SSID, which is hidden, is not visible through conventional network scans and is configured with security credentials that are dynamically generated through a proprietary algorithm.

After the user installs the client application, the software executes necessary authentication or subscription steps. Once the device is authenticated, the client application initiates a background process that scans for hidden SSIDs in the vicinity. These hidden SSIDs follow a system-specific structure or contain embedded identifiers, which are not readily interpretable without access to the proprietary software. The application utilizes an algorithm, as described in the referenced patent application, to decode the appropriate SSID names and passwords in real time.

Once authenticated, the client device connects to one or more hidden SSIDs that are operating within the system. The proprietary software then establishes multiple concurrent wireless links and aggregates them into a bonded virtual network interface. This interface presents itself to the user device as a single internet connection, though it is underpinned by multiple simultaneous wireless connections to distinct host nodes.

The bonding logic used by the client application may incorporate various techniques to optimize performance and ensure resilience. For example, the application may evaluate the quality and performance of each link, and dynamically distribute traffic across the available channels based on throughput, latency, signal strength, or connection stability. If any one of the connections fails or degrades, the bonded interface continues operating by redistributing traffic across the remaining active links. This provides continuous internet access without interruption or manual intervention by the user.

The system incorporates multiple layers of security to prevent unauthorized access and maintain privacy. The hidden SSIDs are not broadcast in beacon frames, making them undiscoverable through standard scanning tools. The credentials required to access these networks are derived algorithmically, rather than being statically stored or transmitted. Furthermore, communications across the bonded virtual interface may be encrypted using established protocols such as TLS, SSL, or virtual private networks (VPNs). Additional features may include time-based credential rotation, session-based access control, and optional integration with a centralized authentication or analytics server.

The present invention is hardware-agnostic and may be implemented across a variety of computing platforms. The host devices may include laptops, smartphones, tablets, embedded Wi-Fi modules, or purpose-built networking hardware. The client devices may consist of any user device capable of running the client software and supporting wireless communication, such as smartphones, notebooks, and tablets. In some embodiments, the system may be configured to operate in mobile or vehicular environments, where the bonded mesh network provides continuous access while in motion.

The invention is particularly well suited for deployment in emerging and developing markets where the internet is inadequately served and in scenarios where stable connectivity is difficult to maintain using traditional infrastructure. This includes temporary event sites, rural areas, emergency response zones, construction sites, and mobile field operations. The ability to automatically discover and bond to multiple hidden SSIDs allows users to benefit from increased bandwidth, connection redundancy, and improved fault tolerance in challenging environments.

### ALTERNATIVE EMBODIMENTS

While the foregoing description has focused on one preferred implementation involving client devices connecting to hidden SSIDs broadcast by nomadic and fixed host nodes, the invention is not limited to this configuration. In alternative embodiments, the host devices may be mobile and dynamically adjust their transmission parameters based on location, signal strength, or environmental conditions.

In one such embodiment, the host system is integrated into a vehicular platform such as a service van, emergency response vehicle, or mobile command unit. The vehicle may carry a computing device or embedded wireless router broadcasting both the open and hidden SSIDs. As the vehicle moves through the coverage area, it may dynamically adjust its SSID broadcast schedule or range, allowing client devices to automatically transition between available host nodes.

In another embodiment, host devices may be installed on unmanned aerial vehicles (UAVs) or tethered drones to provide airborne network coverage in remote or disaster-affected areas. These airborne hosts may broadcast proprietary hidden SSIDs downward toward users or field devices and act as part of a broader mesh network, thereby extending signal coverage and supporting critical communication needs.

In a further variation, the system may operate without requiring the download of a client application. Instead, a web-based interface may be used to perform credential decoding and manage bonding logic through advanced browser APIs or embedded OS-level features. This alternative may be particularly useful for deployments in environments with restricted app installation permissions, such as public institutions or corporate-controlled devices.

In still another embodiment, the bonding and SSID recognition processes may be offloaded to a centralized network controller or authentication server. In this case, the client device maintains lightweight logic and relies on cloud infrastructure to negotiate credentials, monitor available links, and manage encrypted data tunnels.

These and other alternative configurations may include variations in how SSIDs are generated or discovered, how bonding is performed, and how authentication is managed, all of which fall within the scope of the present invention.

### USE CASES

The invention has numerous practical applications across both civilian and professional domains.

In a rural connectivity scenario, a series of low-cost host nodes may be installed throughout a remote community. Each node broadcasts a hidden SSID and operates on independent power and backhaul. Resident users equipped with the client application may roam between these nodes, maintaining bonded connections across multiple points, thereby achieving stable internet service without the need for traditional wired infrastructure.

In a temporary event setting, such as a festival or trade show, the system may be used to rapidly deploy pop-up internet service. Event organizers can install host devices across the venue, and attendees may connect through an open SSID to download the client application. Once authenticated, their devices automatically connect to hidden SSIDs throughout the venue, with the client software bonding the connections in real time to optimize throughput and prevent congestion.

In emergency or disaster response operations, the system can provide critical connectivity in environments where infrastructure has been damaged or is unavailable. Response teams may carry host-enabled devices and set up mobile hotspots with hidden SSIDs. Field personnel can onboard through the open SSID, authenticate, and immediately benefit from multi-channel bonded connectivity, supporting secure communications, data transfer, and real-time coordination.

In industrial or construction environments, where wired connectivity is impractical or hazardous, the system may be deployed using rugged host nodes with solar or battery power. Workers' devices automatically bond to multiple hidden access points, ensuring uninterrupted communication for safety, logistics, or telemetry systems.

These use cases demonstrate the flexibility and scalability of the invention in real-world environments that demand secure, redundant, and high-performance wireless networking.

## Claims

1. A computer-implemented method for provisioning wireless network access for a client device, the method comprising: connecting, by the client device, to a first wireless network identifier provided by a host device; receiving, through the first wireless network identifier, provisioning information for accessing a proprietary wireless connectivity system; obtaining or deriving, by the client device using the provisioning information, credential information for at least one proprietary wireless network identifier different from the first wireless network identifier; establishing, by the client device using the credential information, a wireless link through the at least one proprietary wireless network identifier provided by the host device or another host device; and transmitting user traffic over the wireless link.

2. The method of claim 1, wherein the first wireless network identifier is a visible onboarding wireless network identifier.

3. The method of claim 1 or claim 2, wherein the provisioning information comprises at least one of client application data, web interface data, an installer, a credential seed, a session token, a policy file, or instructions for detecting, identifying, deriving, selecting, or accessing the at least one proprietary wireless network identifier.

4. The method of any preceding claim, wherein obtaining or deriving the credential information comprises at least one of decoding, identifying, or deriving a proprietary wireless network identifier, deriving a password or key from a credential seed, receiving a rotating credential, or validating a pseudonymous entitlement token.

5. The method of any preceding claim, wherein the at least one proprietary wireless network identifier is hidden, non-broadcast, partially visible, fully visible, coded, obfuscated, encrypted, tokenized, rotating, time-varying, location-dependent, policy-dependent, or otherwise controlled.

6. The method of any preceding claim, wherein the first wireless network identifier and the at least one proprietary wireless network identifier are provided by the same host device.

7. The method of claim 6, wherein the same host device provides the first wireless network identifier and the at least one proprietary wireless network identifier using a single physical wireless network adapter.

8. The method of any preceding claim, wherein the client device discovers a plurality of proprietary wireless network identifiers and establishes a plurality of wireless links through respective proprietary wireless network identifiers.

9. The method of claim 8, wherein the plurality of wireless links are established with proprietary wireless network identifiers provided by different host devices.

10. The method of claim 8 or claim 9, further comprising aggregating the plurality of wireless links into a bonded virtual network interface that is presented to the client device as a single logical connection.

11. The method of claim 10, wherein the bonded virtual network interface performs at least one of packet-level splitting, flow-level scheduling, multipath tunneling, virtual private network encapsulation, redundant packet duplication, load balancing, or failover.

12. A wireless connectivity system comprising: one or more host devices configured to provide an onboarding wireless network identifier and at least one proprietary wireless network identifier different from the onboarding wireless network identifier; and a client device configured to connect to the onboarding wireless network identifier to obtain provisioning information, obtain or derive credential information from the provisioning information, establish a wireless link through the at least one proprietary wireless network identifier using the credential information, and transmit user traffic through the wireless link.

13. The system of claim 12, wherein at least one of the one or more host devices comprises a routing or network address translation gateway module configured to transfer data between a client-facing proprietary wireless link and an uplink network interface.

14. The system of claim 12 or claim 13, further comprising a central coordination server configured to perform at least one of account management, policy management, credential rotation, anonymous or pseudonymous token issuance, audit logging, connectivity ledger maintenance, reporting, analytics, grant management, or payment coordination.

15. The system of any one of claims 12 to 14, wherein a provisioned client device is configured to enter a host, relay, cache, onboarding, local distribution, or proprietary wireless access mode subject to policy conditions.
